# EUROPEAN PATENT SPECIFICATION

(11) **EP 3 767 149 B1**
(45) Date of publication and mention of the grant of the patent: **07.06.2023**
(21) Application number: 20182080.0
(22) Date of filing: 24.06.2020
(51) Int. Cl.: F16L 55/105, F16L 55/16, F16L 55/17, F16L 55/179, B29C 45/00, F16K 3/02, F16K 27/04

(54) **PIPE REPAIR DEVICE**
ROHRREPARATURVORRICHTUNG
DISPOSITIF DE RÉPARATION DE TUYAU

(30) Priority: 28.06.2019 US 201916457218
(43) Date of publication of application: 20.01.2021
(73) Proprietor: Sundrla, Thad Paul, Drake, CO 80515 (US)
(72) Inventor: Sundrla, Thad Paul, Drake, CO 80515 (US)
(74) Representative: Williams, David John

(56) References cited:
- EP-A2- 2 442 001
- GB-A- 2 464 489
- GB-A- 2 483 943
- GB-A- 2 505 528
- US-A1- 2002 070 316

## Description

### Related Applications

The present application claims priority from US patent application number 16/457,218, published as US 2019 0316726, which is a Continuation-In-Part (CIP) US patent application of US patent application number 16/113,155 entitled "Shut-Off Device" and filed August 27, 2018, which is a CIP of US patent application number 15/143,872 entitled "Shut-Off Device" and filed May 2, 2016, which claims benefit of priority to U.S. provisional patent application number 62/157,170 entitled "Universal Post-Failure Shut-off Rescue Device" and filed May 5, 2015.

### Background

Pipes are commonly used in just about every home and commercial and government buildings to carry water. Pipes and other conduits are also used in many industries to carry other liquids and gases such as hydraulic lines in factories and in heavy equipment. Millions of miles of pipes and conduits are part of our aging infrastructure. Large pipelines carry oil over huge distances. Pipes and other conduits may become damaged or break due to fatigue, corrosion, exposure to elements and temperature differentials, as well as accidental or negligent damage (e.g. hitting or inadvertently cutting into or through the pipe), or due to any number of other circumstances, even intentional sabotage. When pipes break, the resulting damage, physical, environmental and often medical, from the water or other substances carried by the conduit, can be extensive.

Many products on the market today focus on preventing breakage or leaks from occurring. As none of these are fail-proof however, with many safety devices themselves suffering from fatigue and other factors diminishing their performance, breakages and leaks happen all the time. Sometimes the damages go into catastrophic proportions, depending on the size and scope of the leak, type of substance, infrastructure and distances involved, and how long it takes to shut off the source or otherwise stop the leak.

GB 2483943 discloses a device for sealing a leak/burst pipe.

### Summary

In accordance with the invention there is provided a pipe repair device according to claim 1. Further in accordance with the invention there is provided a method of using a pipe repair device according to claim 12.

Implementations described and claimed herein address the foregoing problems by providing a pipe repair device comprising a molded sleeve section including a contiguous strike, and a molded handle section including a contiguous draw hook, the molded handle section connected to the molded sleeve section with a first living hinge, the draw hook to selectively engage with the strike when the pipe repair device is applied to a damaged pipe.

Implementations described and claimed herein address the foregoing problems by further providing a method of using a pipe repair device comprising placing a molded sleeve section around a damaged pipe, engaging a contiguous strike of the molded sleeve section with a contiguous draw hook of a molded handle section, the molded handle section connected to the molded sleeve section with a first living hinge, and applying compressive force to the molded handle section to lock the pipe repair device to the damaged pipe.

Implementations described and claimed herein address the foregoing problems by still further providing a pipe repair device comprising: a first molded sleeve section including a contiguous strike, a second molded sleeve section connected to the first molded sleeve with a sleeve living hinge, a first molded handle section connected to the molded sleeve section with a living hinge, and a second molded handle section including a contiguous draw hook. The second molded handle section is connected to the first molded handle section with a handle living hinge, and the draw hook is to selectively engage with the strike when the pipe repair device is applied to a damaged pipe.

Other implementations are also described and recited herein.

### Brief Descriptions of the Drawings

FIG. 1 is a perspective view of an example shut-off device.
FIG. 2 is an exploded perspective view of an example shut-off device.
FIG. 3 is a front view of an example shut-off device.
FIG. 4 is a top view of an example shut-off device.
FIG. 5 is a side view of an example shut-off device.
FIGS. 6A-6C are side views illustrating operation of an example shut-off device.
FIG. 7 is a perspective view of another example sleeve housing for a shut-off device.
FIG. 8 shows an alternate example shut-off device, that may be used with the buckle from FIG. 7 or other similar buckle.
FIG. 9 is an exploded component view of FIG. 8.
FIG. 10 is a close-up view of the blade holding assembly for the shut-off device of FIGS. 8 and 9.
FIG. 11 is a closeup view of another blade holding assembly.
FIG. 12 illustrates a perspective view of an example pipe repair device, not covered by the claims, prior to being applied to a damaged pipe.
FIG. 13 illustrates a perspective view of an example pipe repair device, not covered by the claims, after being applied to a damaged pipe.
FIG. 14 illustrates a cross sectional view of an example pipe repair device, not covered by the claims, in an unlatched position over a damaged pipe.
FIG. 15 illustrates a cross sectional view of an example pipe repair device, not covered by the claims, in a latched position over a damaged pipe.
FIG. 16 illustrates a cross sectional view of an example pipe repair device, not covered by the claims, in a break-over position over a damaged pipe.
FIG. 17 illustrates a cross sectional view of an example pipe repair device, not covered by the claims, in a locked position over a damaged pipe.
FIG. 18 illustrates a perspective view of an example pipe repair device according to the invention having an overlap portion in a locked position.
FIG. 19A illustrates a perspective view of an example tee repair device in an open position.
FIG. 19B illustrates a perspective view of an example tee repair device in a closed position.
FIG. 20A illustrates a perspective view of an example elbow repair device in an open position.
FIG. 20B illustrates a perspective view of an example elbow repair device in a closed position.
FIG. 21 illustrates example operations for using a pipe repair device to seal an opening in a damaged pipe.

### Detailed Descriptions

A shut-off device is disclosed. An example shut-off device includes an upper valve body, and a lower valve body. The lower valve body connects to the upper valve body to surround a section of a pipe to form a chamber. A cutting blade in the chamber is tightening against the pipe to cut through the pipe, and seal or at least partially seal the opening in the cut pipe. Following a repair to the pipe, the cutting blade may be operated as a gate valve, opening to permit fluid flow through the pipe, and closing to at least partially restrict or fully stop fluid flow through the pipe.

In an example, the shut-off device may be implemented as a universal post-failure shut-off rescue device. The shut-off device can be implemented to shut off a section of pipe, e.g., so that a repair can be made. The shut-off device may be operated to stop leakage and/or other spills from a conduit (also referred to herein as a "pipe") transporting a liquid or gas. The device may be operated even after all other shut-off systems (e.g., valves) have failed.

In an example, the shut-off device is assembled onto the pipe at a desired location, e.g., upstream from the damage or point of failure and then operated to cut through or sever the pipe while simultaneously closing the pipe to restrict or altogether stop flow out of the pipe. In some cases, another device may be assembled onto the pipe downstream to prevent backflow.

Following repair, the shut-off device can be operated to restore normal flow in the pipe. In an example, the shut-off device can remain in place after the pipe has been repaired, and operated as a gate valve, e.g., to allow and to stop fluid flow within the pipe.

The shut-off device may be implemented to slow or even entirely stops leaks (including small leaks, spills, and even entire blowouts). The shut-off device can be implemented with any of a wide variety of different types and/or sizes of pipe, including but not limited to, hoses, water lines, gas lines, oil pipes and pipelines, above ground, subsurface, and/or in submarine environments.

Before continuing, it is noted that as used herein, the terms "includes" and "including" mean, but are not limited to, "includes" or "including" and "includes at least" or "including at least." The term "based on" means "based on" and "based at least in part on." The term "pipe" is not limited in scope. That is, the shut-off device described herein may be used with any type or size pipe or other conduit.

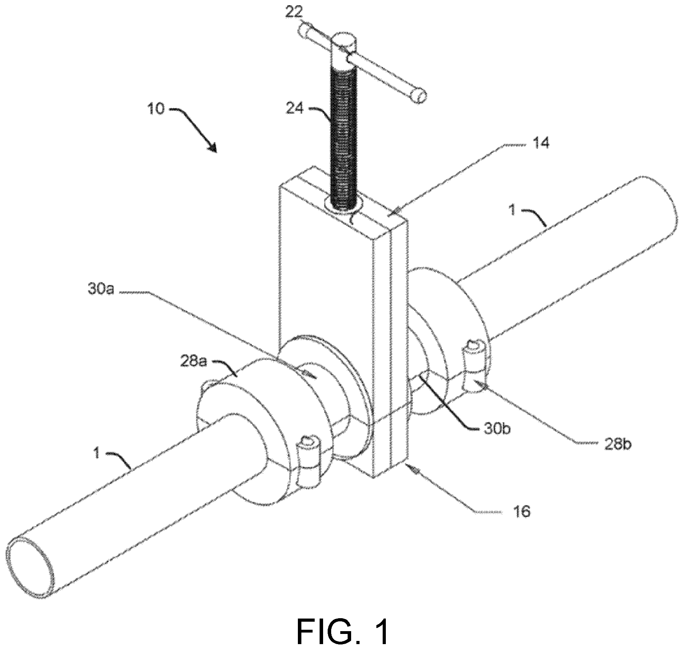

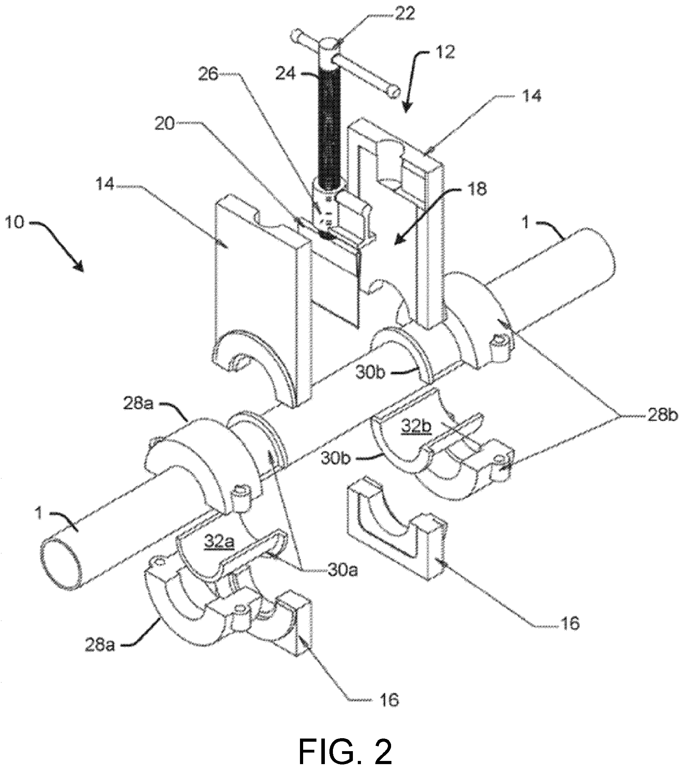

FIG. 1 is a perspective view of an example shut-off device **10.** FIG. 2 is an exploded perspective view of the example shut-off device **10** shown in FIG. 1. It is noted that components shown in FIG. 2 are illustrated in an exploded view to better call out individual components. However, these components are not necessarily detachable. That is, multiple of the components may be formed as a single unit, such as various components of the valve housing (e.g., the upper valve body **14** and various components of the lower valve body **16**). Assembly of the device will be well understood by those having ordinary skill in the art after becoming familiar with the teachings herein.

The example shut-off device **10** shown in FIGS. 1 and 2 includes a valve body **12** having an upper valve body **14,** and a lower valve body **16.** The lower upper body **14** and the lower valve body **16** can be assembled together around a section of a pipe **1** and form a chamber **18** (visible in FIG. 2) within the valve body **12.**

A cutting blade **20** is provided in the chamber **18.** In an example, the size of the cutting blade **20** is larger than twice the diameter of the pipe **1.** Such a configuration enables the cutting blade **20** to perform both a cutting function and a blocking or sealing function.

In an example, the chamber **18** is sized to retain the cutting blade **20** and permit movement therein, without being over-sized. This is because fluid may flow into the chamber **18** and it is desired to let as little fluid into the chamber **18** as possible.

In another example, the chamber **18** is sized to accommodate the cutting blade **20.** For example, the chamber **18** may be enlarged to accommodate other structure, such as an internal block (not shown) and/or installation of driving assembly (e.g., gears, not shown) for the cutting blade **20.** The size of chamber **18** may be configured based on various drive options for the cutting blade, such as but not limited to, mechanical, electrical, hydraulic, and/or pneumatic drive assemblies (e.g., gears, motors, pistons, etc.).

In an example, the cutting blade **20** may be operated by handle **22.** Turning the handle **22** rotates the threaded lead screw **24** through threaded block or nut **26.** The threaded block **26** serves to brace the threaded lead screw **24** and cause the cutting blade **20** move up or down within the chamber **18.**

In an example, the cutting blade **20** may be tightened with sufficient downward pressure so as to cut through the pipe **1.** In another example, the cutting blade **20** may be tightened to provide pressure against the outer perimeter of the pipe **1,** and then the shut-off device **10** may be rotated about the pipe while continuing to apply pressure to the blade (e.g., by rotating handle **22**) to cut through the pipe **1.**

Cutting through the pipe **1** at least partially seals the open end in the pipe **1** that was formed by cutting the pipe **1.** In an example, the cutting blade **20** seals against the open end of the pipe **1** to slow or stop fluid flow. In another example, fluid from the pipe **1** may leak or flow into the chamber **18** and is sealed within the chamber **18.** As such, the shut-off device **10**slows or altogether stops fluid flow from the opening in the pipe **1.**

In an example, the shut-off device **10** includes a first valve clamp **28** *a* to secure the upper valve body **14** to the lower valve body **16.** A second valve clamp **28** *b* secures the opposite side of the shut-off device **10.**

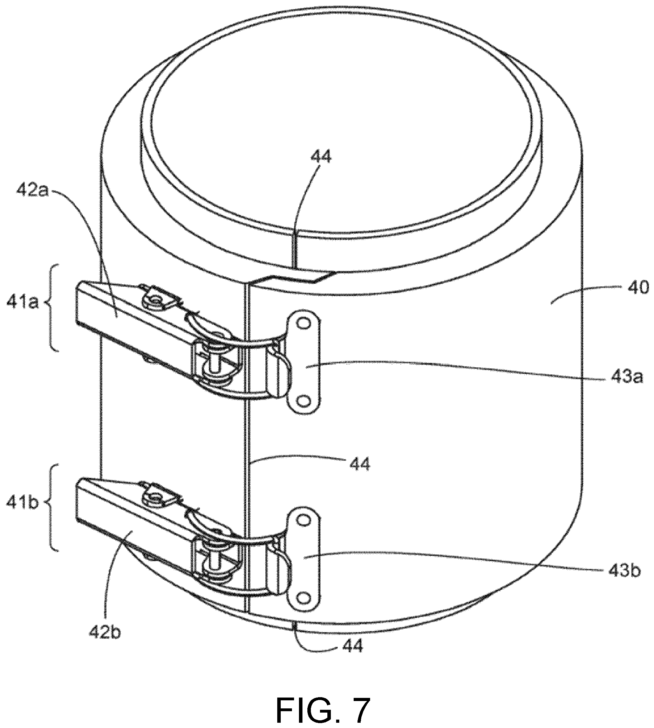

A first flange bearing **30** *a* may be provided as a seal between the first valve clamp **28** *a* and the pipe **1.** A second flange bearing **30** *b* seals the second valve clamp **28** *b* and the pipe **1** on the opposite side. The first and second flange bearings 30 *a* and 30 *b* form a sleeve housing. The first and second flange bearings 30 *a* and 30 *b* may have an upper portion and a lower portion so that the flange bearings can be assembled onto the pipe **1.** Another example sleeve housing is shown in FIG. 7.

The example first flange bearings 30 *a* and 30 *b* may include a seat **32** *a* and **32** *b*, respectively. The seat **32** *a* and **32** *b* may be a rubber gasket, or other pliable material provided on the surface that is in contact with the pipe **1,** or therebetween. The seat **32** *a* and **32** *b* provides a seal against the pipe **1,** and may also aid in retaining the shut-off device **10** in position on the pipe **1,** e.g., during a cutting operation and/or after the pipe **1** is cut and pressure builds up due to the fluid being released into the chamber **18.** As such, the seat **32** *a* and **32** *b* serves as a seal and/or as a pressure side retainer ring to prevent the section of the pipe from sliding relative to the shut-off device **10.**

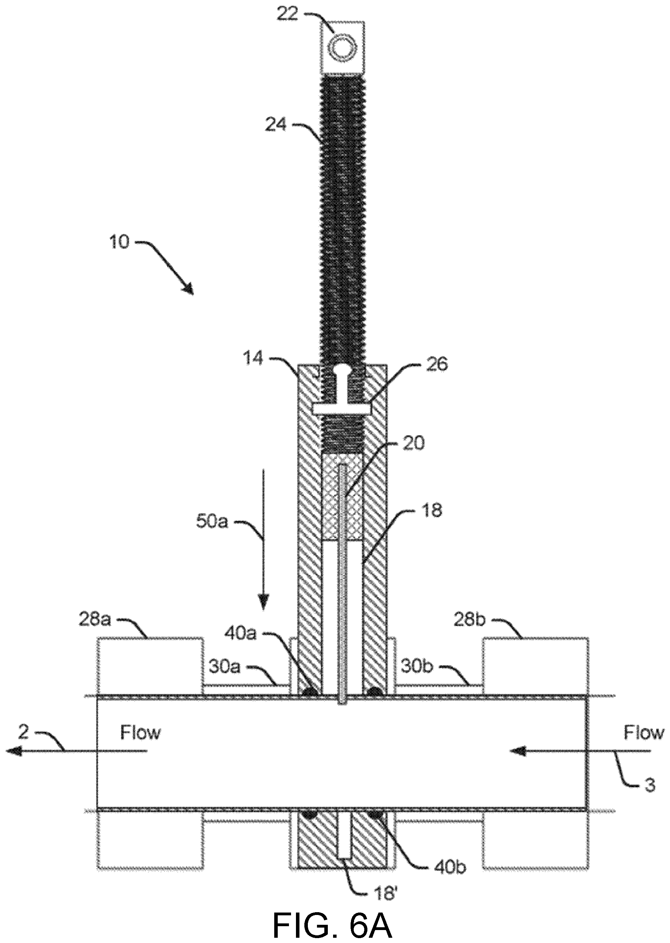

Although not shown, other seals (e.g., gasket, washer, or O-ring) may also be provided. An example can be seen by the end-view of O-rings **40** *a* and **40** *b* seen in the cross-sectional view of FIGS. 6A-6C. These seals can be readily implemented with the shut-off device **10** by one having ordinary skill in the art after becoming familiar with the teachings herein, in order to better seal the shut-off device **10** against leaks.

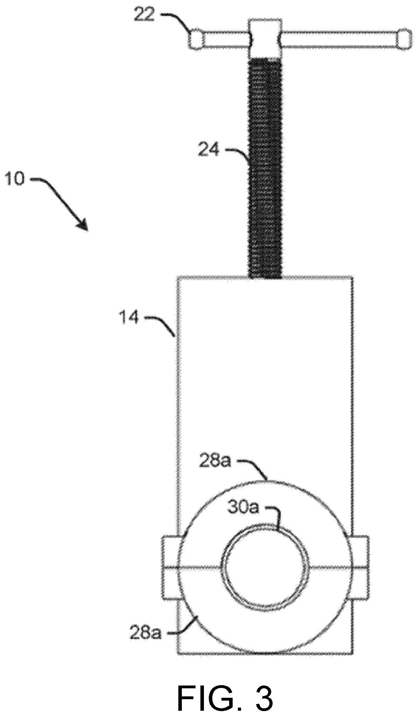

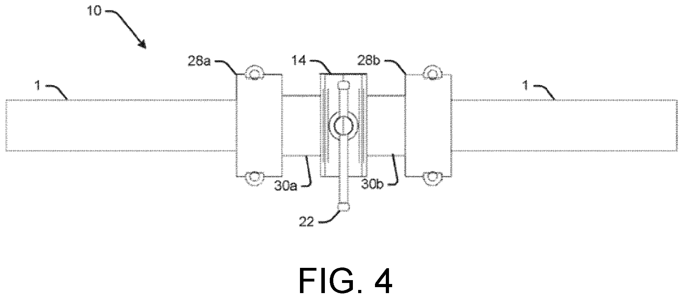

FIG. 3 is a front view of an example shut-off device **10.** FIG. 4 is a top view of an example shut-off device **10.** The shut-off device **10** includes a cutting blade **20** installed in a housing. The housing may include separate portions which may be connected, e.g., by fastener (not shown) to form an integrated single unit. The "split" configuration of the housing enables the shut-off device **10** to be separated and assembled onto the pipe **1.**

It is noted that the assembled components of the housing may be any size, shape, and/or other configuration. The specific configuration may be based on design consideration, such as but not limited to the size of the pipe (e.g., pipe diameter). In general, the assembled components on the pipe **1** should form a tight fit between the shut-off device **10** and the pipe **1.**

Before continuing, it should be noted that the examples described above are provided for purposes of illustration and are not intended to be limiting. Other devices and/or device configurations may be utilized to carry out the operations described herein. Various other configurations of the shut-off device **10** are also contemplated, as will be apparent to those having ordinary skill in the art after becoming familiar with the teachings herein.

By way of illustration, the shut-off device **10** may include a cutting wheel. The blade is operable to cut through the pipe (e.g., by rotating the wheel or slicing straight through with the blade) sufficiently to cut through the entire pipe and thereby shut-off flow. In an example, the entire cutting wheel, including the housing, rotates around the pipe, cutting the pipe, thereby covering the entire opening of the pipe with the gate valve (or any valve or other mechanical device), and consequently shutting off the flow.

It is noted that the assembled device may be configured based at least in part on the diameter of the pipe, e.g., to provide a tight fit while still enabling the cutting wheel to rotate about the pipe **1.**

By way of further illustration, the shut-off device **10** may be configured for low-pressure environments (e.g., fluid flow within the pipe of about 50-70 psi), such as is typical in household water pipes. An example configuration includes a larger chamber **18.** That is, the chamber **18** is not as tight surrounding the blade **20** as it may be in a higher-pressure environment. In an example, the chamber **18** may be configured large enough to receive an internal block (not shown), which can be forced against the pipe **1** during cutting. In this embodiment, a low flow (e.g., dripping) may be observed after severing the pipe. But this typically is not expected to impact the repair work on the pipe **1.**

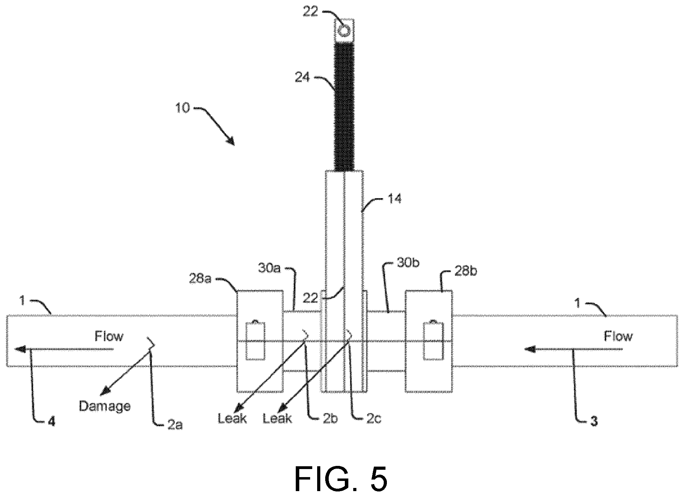

Regardless of the specific configuration of the shut-off device **10,** it may be implemented to prevent leakage at a damaged portion of the pipe **1,** as shown in FIG. 5. FIG. 5 is a side view of an example shut-off device. In this example, flow is coming from a source (e.g., the city water pipes) as illustrated by arrow **3,** and headed downstream (e.g., toward a sink faucet) as illustrated by arrow **4.**

In an example, the shut-off device **10** can be assembled in close proximity, upstream from the damaged area **2** *a* of the pipe **1.** For example, the shut-off device **10** may be assembled in close proximity when the pipe **1** is damaged but not leaking.

In another example, where the pipe is leaking from the damaged area, the shut-off device **10** can be assembled over the damaged portion **2** *a* of the pipe **1.** That is, the first valve clamp **28** *a* and first flange bearing **30** *a* may cover a leak from the damaged portion **2** *b* to stop the leak in the short term, while the cutting blade **20** is operated. After the cutting blade **20** has cut through the pipe and is blocking flow **3** (e.g., serving as an emergency gate valve), the first valve clamp **28** *a* and first flange bearing **30** *a* may be removed from the shut-off device **10** and the damaged portion **2** *b* repaired.

Following stoppage (or slowing) of the leak, the sleeve housing beyond the "valve" that has been formed, may be opened independently to remove the damaged pipe so that a new pipe can be inserted and installed. This portion of the sleeve housing can then be closed again and the gate valve can be re-opened and re-closed as needed (e.g., as an emergency gate valve) to resume normal flow and to control volume and pressure of the flow in the repaired pipe. In an example, the gate valve cannot be removed and reused, thereby maintaining the integrity of the original installation.

In another example, where the pipe is not going to be repaired, the shut-off device **10** can be assembled directly over the damaged portion **2** *c*. In this example, the damaged portion **2** *c* of the pipe **1** remains in the body of the shut-off device **10.** It may be self-sealing, internally sealed or by tightening a lever compression clamp.

In an example, the shut-off device **10** may be operated to shut flow even after all other shut-off systems (e.g., valves) have failed. In addition, the shut-off device **10** can remain in place and serve as a gate valve itself. That is, the cutting blade can be opened to permit fluid flow through the pipe **1,** and closed to at least partially restrict or fully stop fluid flow through the pipe **1.** These and other operations will be discussed in more detail below with reference to the illustration shown in FIGS. 6A-6C.

FIGS. 6A-6C are side views illustrating operation of an example shut-off device **10.** In FIG. 6A, the upper and lower portions of the shut-off device **10** may be assembled around the pipe **1.** In an example, the shut-off device **10** provides a stationary sleeve housing which can be wrapped around the pipe in a sealed manner. This may be achieved by either a hinged or clamp-like or other overlapping or bolted configuration, which is attached around the pipe below the failure point, to seal and retain the pipe adjacent the leak. For example, the shut-off device **10** may be bolted (or otherwise fastened) together to provide a sealing surface on the pipe sections. Seats **32** *a* and **32** *b* (FIG. 2) and/or retainer rings (not shown) may be provided to reduce or altogether eliminate the slide out tendency of pipe ends.

After assembling the shut-off device **10** at the desired location on the pipe **1,** the cutting blade **20** may be operated to cut through the pipe **1** (e.g., either by rotation or unidirectional force through the pipe **1**), and close off the opening that has been cut, as illustrated by arrow **50** *a.* The shut-off device **10** is configured to simultaneously stop a leak (e.g., by assembling over the leak) and serve as a sealed gate valve by shutting off the flow within the pipe and prevent further leaking from the pipe **1,** as illustrated when the cutting blade **20** has fully cut through the pipe **1** and seated within portion **18'** of the chamber **18.**

In an example, the housing sleeve on either side of the sealed gate valve is configured to be assembled independently and can thus be removed to repair the pipe section after flow has been shut off by the cutting blade **20.** That is, the shut-off device **10** fully depressurizes the damaged section of the pipe and can either seal the flow, or at least dampen flow to a minimal level that enables the valve clamp **28** *a* and/or **28** *b* and flange bearing **30***a* and/or **30** *b* to be removed and the pipe repaired.

Following stoppage (or slowing) of the leak, the sleeve housing beyond the "valve" that has been formed, may be opened independently to remove the damaged pipe so that a new pipe can be inserted and installed. In an example, the valve clamp **28** *a* and/or **28** *b* and flange bearing **30** *a* and/or **30** *b* can then be closed again and the cutting blade **20** implemented as a gate valve. Of course, the pipe does not need to be repaired, and can remain either within the chamber **18** or sealed by the valve clamp **28** *a* and/or **28** *b* and flange bearing **30** *a* and/or **30** *b.*

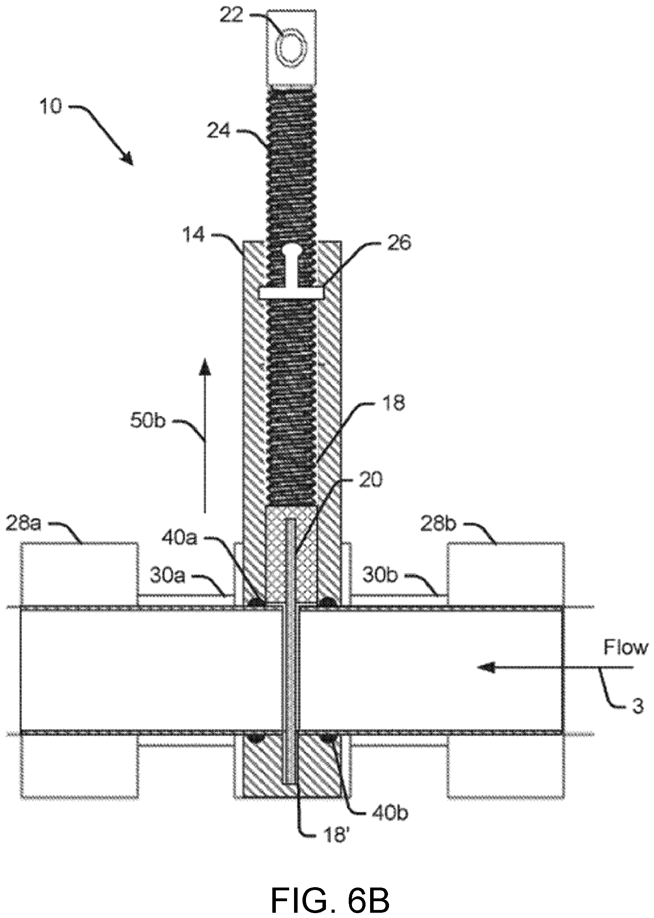

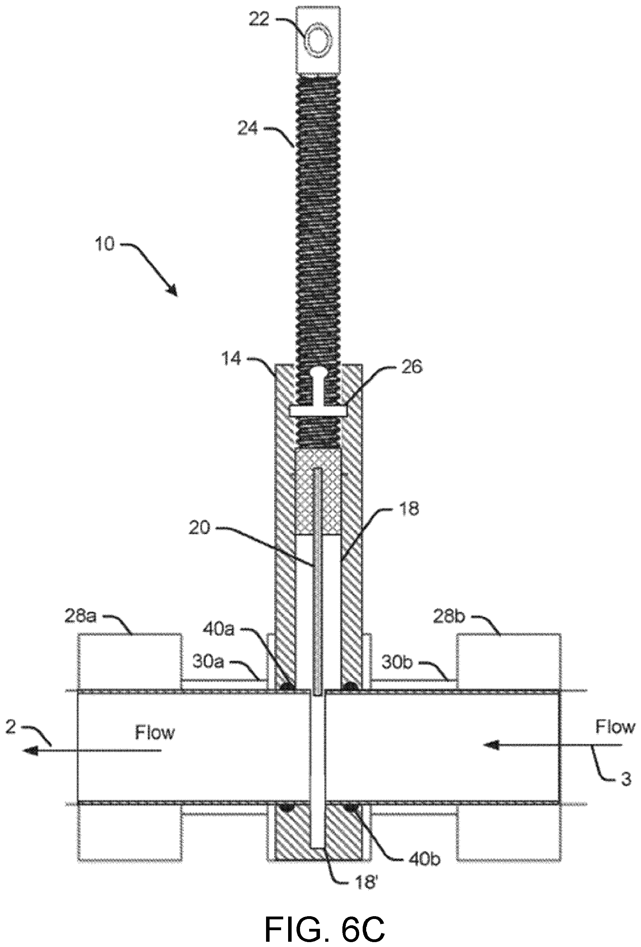

The gate valve can be opened (e.g., in the direction of arrow **50** *b* in FIG. 6B) to resume normal flow and, partially or fully closed (e.g., in the direction of arrow **50** *a* in FIG. 6A) to control volume and pressure of the flow in the pipe **1,** as illustrated in FIG. 6B (closed) and FIG. 6C (open). It is noted that the term "gate valve" is not limited to any particular type of valve, and other valves may also be implemented. In an example, the gate valve cannot be removed and reused, thereby maintaining the integrity of the original installation.

The operations shown and described herein are provided to illustrate example implementations. The operations are not limited to the ordering shown. Still other operations may also be implemented. By way of illustration, the device may be configured for use on large industrial size pipes (e.g., oil and gas pipelines). In an example, the device may be operated by robotics or as an attachment to other equipment (e.g., front loaders or large excavating machines).

FIG. 7 is a perspective view of another example sleeve housing **40** for a shut-off device. It is noted that the sleeve housing (e.g., as shown in FIG. 7or otherwise) may be implemented by itself. That is, the sleeve housing can be tightened around a damaged portion of a pipe to seal the pipe without anything further being implemented. In another example, the sleeve housing (e.g., as shown in FIG. 7 or otherwise) can be implemented with the cut-off housing, which is employed and described above. That is, the sleeve housing may be utilized to temporarily "patch" a leak until the cut-off housing can be installed and shut off the water supply.

In another example, the sleeve housing **40** may take the place of the valve clamp **28** *a* and seat **32** *a* shown in FIGS. 1 and 2, or of valve clamp **28** *b* and seat **32** *b,* or both.

The sleeve housing **40** shown in FIG. 7 may be configured as a quick-release lever and/or buckle assembly. In an example, the sleeve housing includes a first buckle **41** *a* with a lever **42** *a* and hook **43** *a,* and and **41** *b,* and a second buckle **41** *b* with a lever **42** *b* and hook **43** *b*. When opened, these buckles **41** allow the sleeve housing **40** to be spread open along a seam **44,** and either placed on or removed from a pipe **1.** When closed, the buckles **41** latch the sleeve housing **40** in its closed position, in order to attach it to a pipe **1.**

The sleeve housing **40** can be opened and closed along the seam **44** to provide a compression clamp. In an example, the sleeve housing includes a hardened outside (e.g., plastic or other material) and a pliable inside (e.g., rubber, foam, etc.). The sleeve housing shown in FIG. 7 may be used instead of the first and second flange bearings **28** *a* and **28** *b* to form a sleeve housing. The sleeve housing may be hinged on one side and clamped on the other end (e.g., about 180 degrees apart from the hinge), or clamped on both ends. Alternatively, the sleeve housing **40** may be made from a relatively pliable material such as spring steel that allows it to be opened and closed without the need for a hinge.

It is also noted that the clamp configuration shown in FIG. 7 may also be implemented for the valve housing (e.g., the upper valve body **14** and various components of the lower valve body **16** in FIG. 1). That is, the valve housing itself may be configured as a quick release lever/buckle compression clamp. The valve housing may be configured as a quick-release lever and/or buckle assembly, such that it can be opened and closed to provide a compression clamp.

In an example, the FIG. 7 compression assembly (e.g., implemented as the valve housing or the housing for the valve itself; or as a sleeve housing), has a hardened outside (e.g., plastic, metal, or other hard material) and a pliable inside (e.g. rubber, foam, etc.), and a somewhat flexible configuration. In an example, the compression assembly may be spread open just sufficiently to surround a pipe and then closed via the quick-release lever and/or buckle and/or any other suitable clamping mechanism. In another example, the compression assembly may be hinged on one side and clamped on the other end (e.g., about 180 degrees apart from the hinge), or clamped on both ends. In an example the housing may be a one-piece overlapping housing, in another example it may have the buckle and/or lever or other suitable compression closure recessed in a channel to accomplish a flush configuration.

In an example, the quick-release lever and/or buckle assembly **41** may serve to tighten (e.g., reduce the inner diameter of the sleeve housing) around the pipe as the lever is actuated. However, any suitable clamping mechanism may be implemented, and is not limited to the quick-release lever and buckle assembly shown in FIG. 7. For example, the bolts shown in previous drawings may also be utilized, wherein tightening the bolts tightens the housing around the pipe.

In another example, the sleeve housing **44** of FIG. 7 may be implemented by itself as a quick repair for broken pipes. This example is best implemented for low pressure flow pipes, such as drain pipes and common household pipes. It could also be employed as a shut-off device for small diameter pipes.

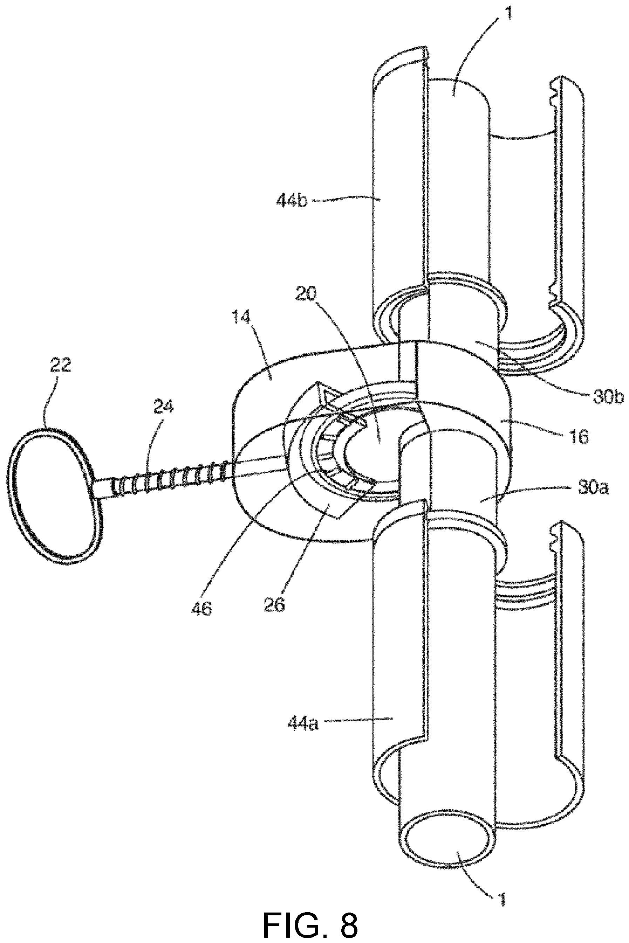

FIG. 8 shows an alternate example shut-off device. that may be used with the buckle from FIG. 7 or other like buckle. This example shows a corkscrew-type handle **22** to tighten the threaded lead screw **24** into the threaded block **26** and hold the cutting blade **20** as it is turned around the pipe **1** to slowly cut a line around the pipe and/or directly through the pipe in "slice cut" mode. The blade is stabilized by rollers **46.** Rollers **46**may be provided in a channel as shown, to operate as roller bearings when making contact with the flat side(s) of the blade. Rollers **46** may be provided on one or both sides of the blade. Also visible are the upper valve body **14,** lower valve body **16,** threaded block **16,** flange bearings **30** *a* and **30** *b,* and sleeve housings **44** *a* and **44** *b.*

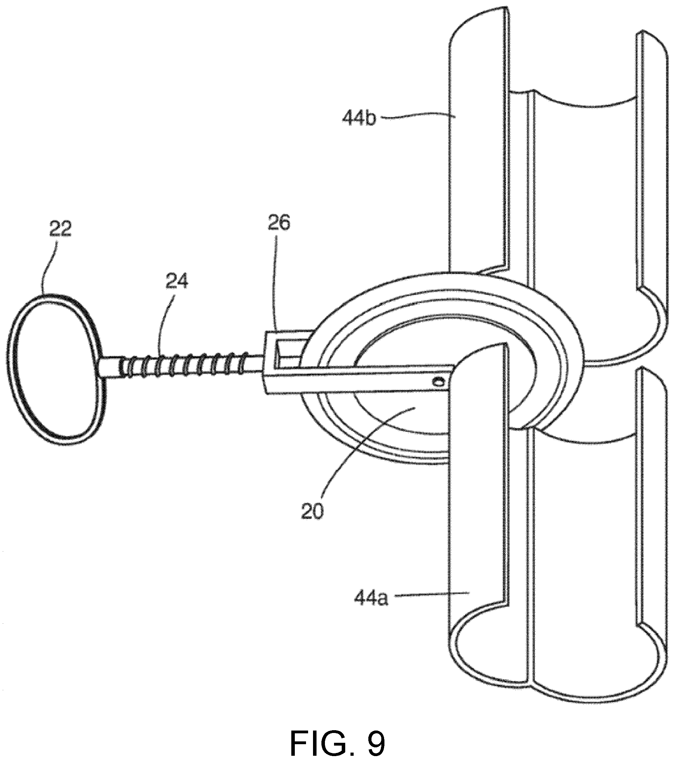

FIG. 9 is an exploded component view of FIG. 8. In this view, the pipe **1,** blade encasement and roller bearings, and flange fittings **30** have been omitted for clarity, so that the cutting blade **20,** handle **22,** threaded lead screw **24,** threaded block **26,** and sleeve housings **44** *a* and **44** *b* may be seen more clearly.

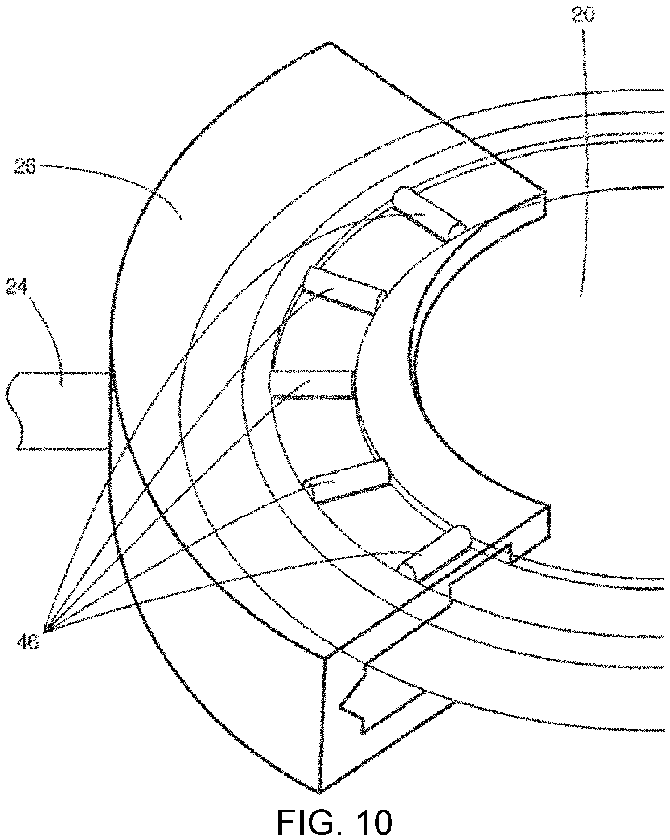

FIG. 10 is a close-up view of the blade holding assembly for the shut-off device of FIGS. 8 and 9. In this example, the rollers **46** are shown as these may support and straighten the blade **20** such that any wobbling is minimized.

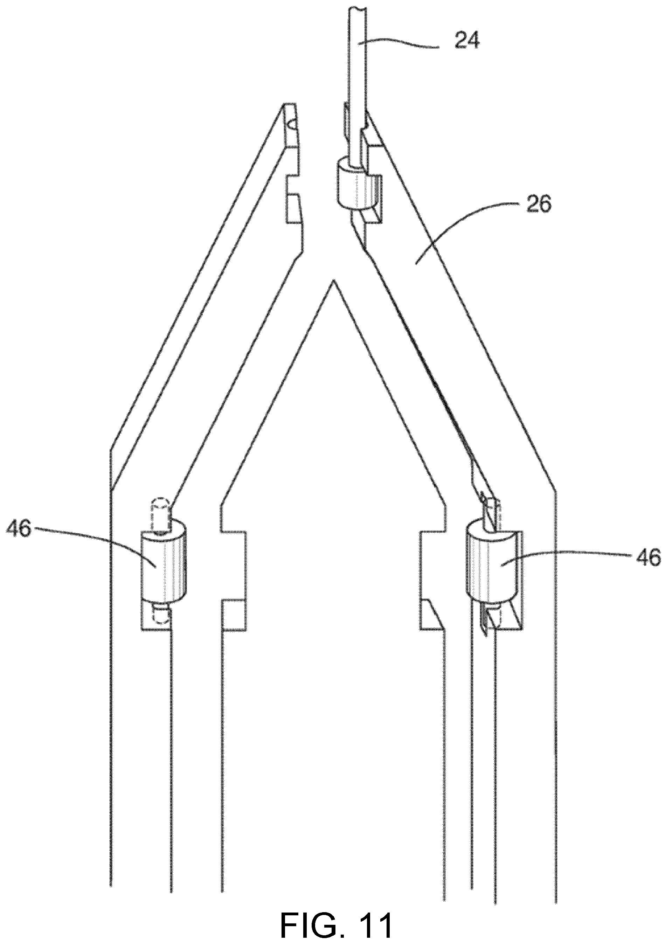

FIG. 11 is a closeup view of another blade holding assembly. In this example, the rollers **46** which support and straighten the blade as described for FIG. 9 are provided with axles to retain the rollers **46** in a predetermined positioning on the blade.

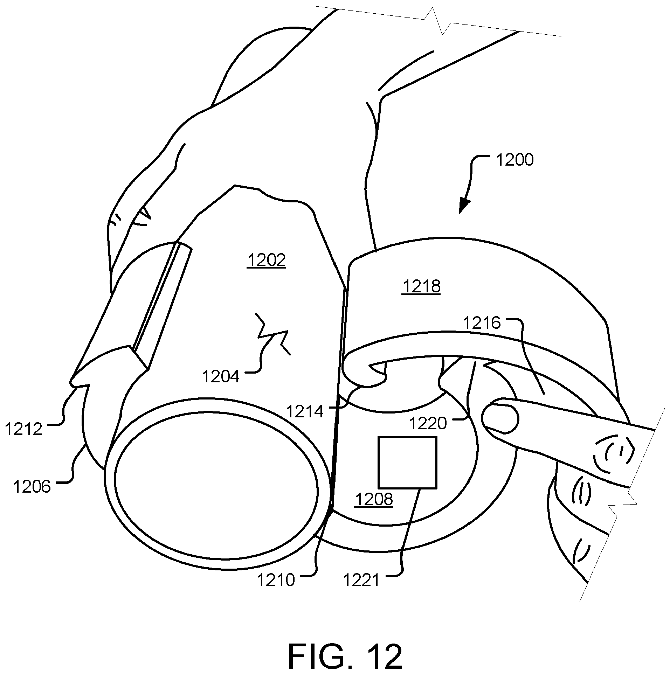

FIG. 12 illustrates a perspective view of an example pipe repair device **1200** prior to being applied to a damaged pipe **1202.** The pipe repair device **1200** is depicted in an unlatched position over the pipe **1202.** While only a section of the pipe **1202** is depicted in FIG. 12 for illustration purposes, the pipe **1202** in service would be continuous from a fluid source (not shown) to a point of use (also not shown). The damaged portion of the pipe **1202** may be a hole, crack, or otherwise weakened area of the pipe **1202** that is localized to a discrete area that may be covered by the pipe repair device **1200** when properly applied to the pipe **1202.** In FIG. 12, the hole, crack, or otherwise weakened area of the pipe **1202** is illustrated by crack **1204.** In various implementations, the pipe **1202** may be of a variety of materials, including but not limited to a plastic (e.g., acrylonitrile butadiene styrene (ABS) or polyvinyl chloride (PVC)) or a metal alloy (e.g., steel, black iron, copper alloy) and be any size or length with a generally round exterior cross-section. In other implementations, the exterior cross-section of the pipe **1202** may be other than round if the pipe repair device **1200** has an interior shape to match.

The pipe repair device **1200** is a molded structure with several contiguous sections, some of which form an over-center spring latch. Each section of the pipe repair device **1200** serves a particular purpose in the pipe repair device **1200,** as described in further detail below. By making the pipe repair device **1200** contiguously molded, potential points of failure at section junctions are reduced, while minimizing overall cost of production for the pipe repair device **1200.** As the pipe repair device **1200** is a singular molded piece, it may also be referred to herein as having a monolithic construction. Further, many of the contiguous sections are connected using living hinges (also referred to herein as flexible or malleable joints, plastically deformable hinges, flexible portions, malleable flex points, and so one), as also described in detail below. In various implementations, the pipe repair device **1200** is constructed of a resiliently deflectable material that enables the pipe repair device **1200** to move and function as an over-center spring latch, as well as permitting the pipe repair device **1200** to compressively deform and seal against the exterior cross-section of the pipe **1202.** As such, the pipe repair device **1200** may have a variety of sizes and shapes in order to conform with different sizes and shapes of the pipe **1202,** as well as expected sizes of the crack **1204** and a projected area beyond the crack **1204** that the pipe repair device **1200** uses to seal the crack **1204.**

As an example, to effectively seal an up to 2" crack in a 4" PVC pipe **1202,** the pipe repair device **1200** may be made of ½" thick resiliently deflectable material and be 4" long. Example materials for the pipe repair device **1200** include various metal alloys and plastics (rigid with a separate gasket or flexible), rubber (natural or synthetic), PVC, nylon, polypropylene, or any other resiliently deflectable plastic. In some implementations, the pipe repair device **1200** may also incorporate a resiliently elastic gasket **1221** to aid in sealing the pipe repair device **1200** to the pipe **1202.** The gasket **1221** is sized and shaped to cover the projected size of the crack **1204** to be sealed. While depicted as a rectangle, the gasket **1221** could be any size and shape. In other implementations, the gasket **1221** lines the entire inside of one or both of the sleeve sections **1206, 1208.**

The pipe repair device **1200** includes a contiguous, but sectioned molded sleeve section (e.g., a first sleeve section **1206** and a second sleeve section **1208**) connected by sleeve living hinge **1210.** In various implementations, the sleeve section is in contact with greater than 50% (or greater than 90%) of the circumference of the pipe **1202** when the pipe repair device **1200** is locked on the pipe **1202.** The sleeve section is opened at the sleeve living hinge **1210** to permit the sleeve sections **1206, 1208** to be placed around the pipe **1202** at the crack **1204.** One of the sleeve sections **1206, 1208** is oriented such that the crack **1204** is placed roughly at the center of one of the sleeve sections (referred to herein as the sealing sleeve section) when the pipe repair device **1200** is in a locked position around the pipe **1202.** By placing the crack **1204** roughly at the center of the sealing sleeve section, there is sufficient sleeve section around the perimeter of the crack **1204** to allow the sealing sleeve section to seal against non-damaged portions the pipe **1202** about the entire perimeter of the crack **1204.** A sufficient sealing sleeve section about the perimeter of the crack may vary widely and depend on various factors (e.g., the size and nature of the crack **1204,** the size and material of the pipe **1202,** the size and material of the pipe repair device **1200,** the fluid type and pressure within the pipe **1202,** and so on).

The pipe repair device **1200** also includes a contiguous, but sectioned molded handle section (e.g., a first handle section **1216** and a second handle section **1218**), which may also be referred to herein as a lever section or a lever end of the pipe repair device **1200.** The first handle section **1216** connects the second sleeve section **1208** and the second handle section **1218** via handle living hinges (e.g., handle living hinge **1220**). The first handle section **1216** is either unloaded or compressed depending on the position of the pipe repair device **1200,** as discussed in further detail below. In the depicted unlatched position, the first handle section **1216** is unloaded. The second handle section **1218** is movable by a user and permits the user to selectively attach and remove the pipe repair device **1200** from the pipe **1202,** as discussed in further detail below. Further, the first sleeve section **1206** includes a contiguous strike **1212** and the second handle section **1218** includes a contiguous draw hook **1214.** The strike **1212** and the draw hook **1214** are selectively engaged / disengaged by the user as discussed in detail below to attach / detach the pipe repair device **1200** to / from the pipe **1202.** In the depicted unlatched position, the strike **1212** and the draw hook **1214** are disengaged and the pipe repair device **1200** is free to move in an effort to place the pipe repair device **1200** properly over the crack **1204** prior to locking the pipe repair device **1200.** Further, the pipe repair device **1200** may be removed entirely from the pipe **1202** from the depicted unlatched position.

In other implementations, the molded sleeve section is a single part and is sufficiently resiliently deflectable to deform around the pipe **1202** without the sleeve living hinge **1210.** Similarly, in other implementations, the molded handle section is a single part and is sufficiently resiliently deflectable to function as both the first handle section **1216** and the second handle section **1218** without the handle living hinge **1220.** Still further, while the pipe repair device **1200** is depicted applied to the straight pipe section **1202,** other implementations may be similarly applied to tee or elbow sections of pipe.

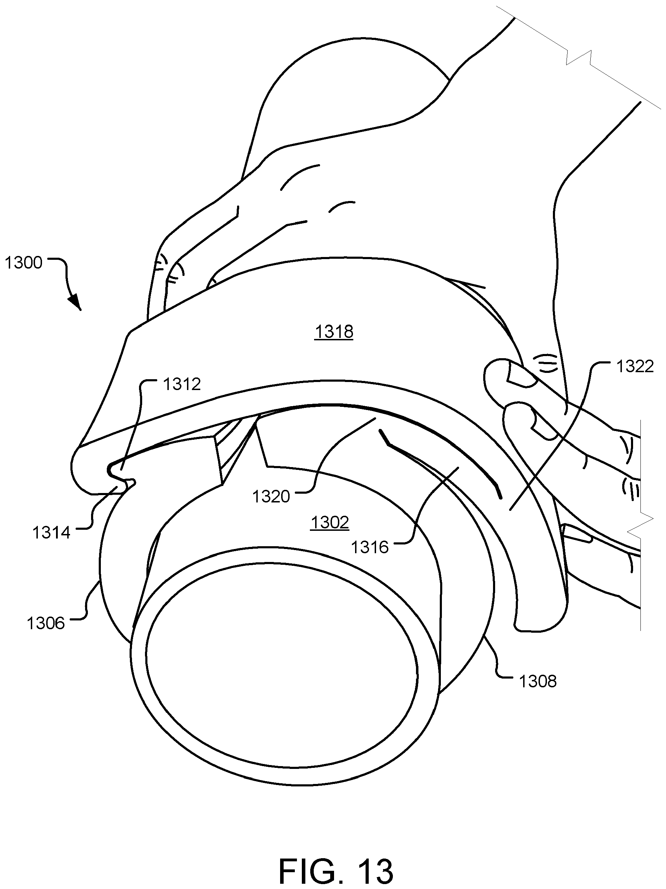

FIG. 13 illustrates a perspective view of an example pipe repair device **1300** after being applied to a damaged pipe **1302.** The pipe repair device **1300** is depicted in a locked position over the pipe **1302.** The pipe repair device **1300** includes a contiguous, but sectioned molded sleeve section (e.g., a first sleeve section **1306** and a second sleeve section **1308**) connected by sleeve living hinge (not shown, see e.g., sleeve living hinge **1210**). The sleeve sections **1306, 1308** are placed around the pipe **1302** at a crack (not shown, see e.g., crack **1204** of FIG. 12), where the sleeve sections are oriented such that the crack is placed roughly at the center of one of the sleeve sections (referred to herein as the sealing sleeve section).

The pipe repair device **1300** also includes a contiguous, but sectioned molded handle section (e.g., a first handle section **1316** and a second handle section **1318**). The first handle section **1316** connects the second sleeve section **1308** and the second handle section **1318** via handle living hinges **1320, 1322,** respectively. The first handle section **1316** is either unloaded or compressed depending on the position of the pipe repair device **1300,** as discussed in further detail below. In the depicted locked position, the first handle section **1316** is compressed, while the second handle section **1318** is tensioned.

The second handle section **1318** is movable by a user and permits the user to selectively attach and remove the pipe repair device **1300** to and from the pipe **1302,** as discussed in further detail below. Further, the first sleeve section **1306** includes a contiguous strike **1312** and the second handle section **1318** includes a contiguous draw hook **1314.** The strike **1312** and draw hook **1314** are selectively engaged / disengaged by the user as discussed in detail below to attach / detach the pipe repair device **1300** to / from the pipe **1302.** In the depicted locked position, the strike **1312** and draw hook **1314** are engaged and the sleeve sections **1306, 1308** are compressively tensioned radially around the pipe **1302,** thus locking the pipe repair device **1300** in place on the pipe **1302** and effectively sealing the crack.

Various additional or alternative details regarding the pipe repair device **1300** and the damaged pipe **1302** are as discussed above with reference to FIG. 12 and also with reference to other Figures herein.

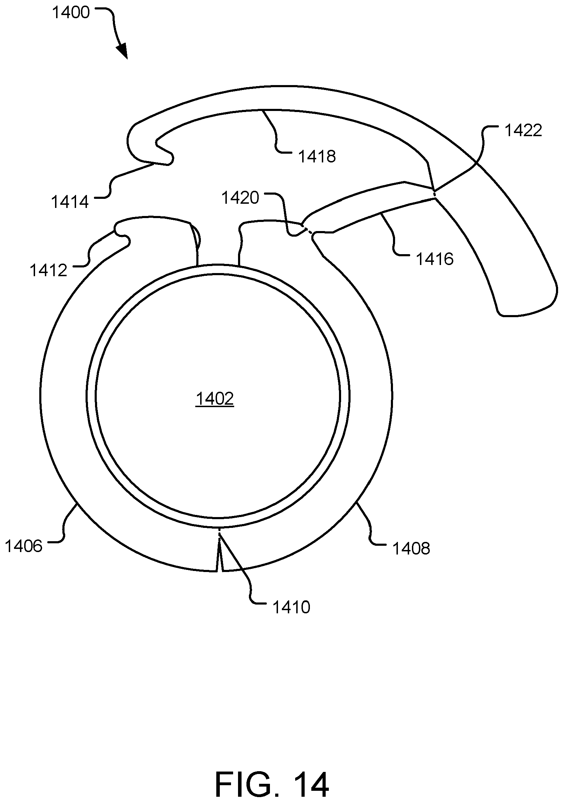

FIG. 14 illustrates a cross sectional view of an example pipe repair device **1400** in an unlatched position over a damaged pipe **1402.** The pipe repair device **1400** includes a contiguous, but sectioned molded sleeve section (e.g., a first sleeve section **1406** and a second sleeve section **1408**) connected by sleeve living hinge **1410.** The sleeve section is opened at the sleeve living hinge **1410** to permit the sleeve sections **1406, 1408** to be placed around the pipe **1402** at a crack (not shown, see e.g., crack **1204** of FIG. 12), where the sleeve sections **1406, 1408** are oriented such that the crack is placed roughly at the center of one of the sleeve sections (referred to herein as the sealing sleeve section).

The pipe repair device **1400** also includes a contiguous, but sectioned molded handle section (e.g., a first handle section **1416** and a second handle section **1418**). The first handle section **1416** connects the second sleeve section **1408** and the second handle section **1418** via handle living hinges **1420, 1422,** respectively. The first handle section **1416** is either unloaded or compressed depending on the position of the pipe repair device **1400,** as discussed in further detail below. In the depicted unlatched position, the first handle section **1416** is unloaded. The second handle section **1418** is movable by a user and permits the user to selectively attach and remove the pipe repair device **1400** from the pipe **1402,** as discussed in further detail below. Further, the first sleeve section **1406** includes a contiguous strike **1412** and the second handle section **1418** includes a contiguous draw hook **1414.** The strike **1412** and the draw hook **1414** are selectively engaged / disengaged by the user as discussed in detail below to attach / detach the pipe repair device **1400** to / from the pipe **1402.** In the depicted unlatched position, the strike **1412** and the draw hook **1414** are disengaged and the pipe repair device **1400** is free to move in an effort to place the pipe repair device **1400** properly over the crack prior to locking the pipe repair device **1400.** Further, the pipe repair device **1400** may be removed entirely from the pipe **1402** from the depicted unlatched position.

Various additional or alternative details regarding the pipe repair device **1400** and the damaged pipe **1402** are as discussed above with reference to FIG. 12 and with also reference to other Figures herein.

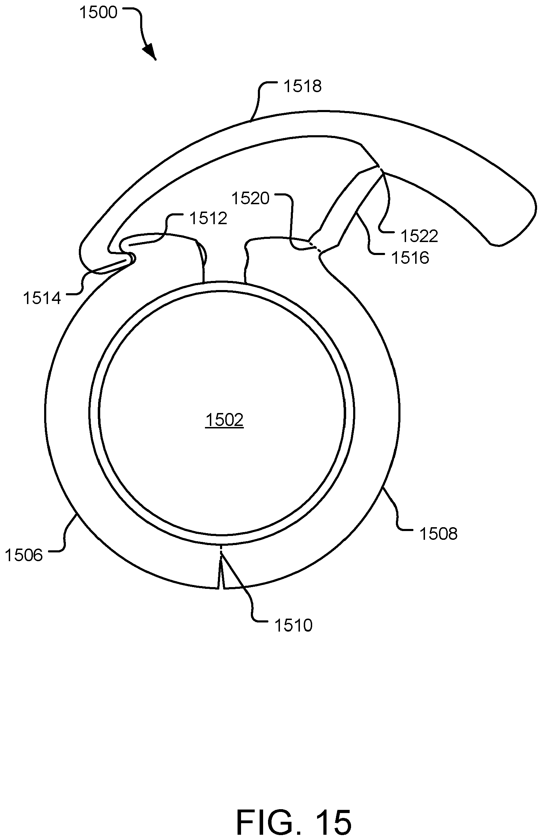

FIG. 15 illustrates a cross sectional view of an example pipe repair device **1500** in a latched position over a damaged pipe **1502.** The pipe repair device **1500** includes a contiguous, but sectioned molded sleeve section (e.g., a first sleeve section **1506** and a second sleeve section **1508**) connected by sleeve living hinge **1510.** The sleeve section is opened at the sleeve living hinge **1510** to permit the sleeve sections **1506, 1508** to be placed around the pipe **1502** at a crack (not shown, see e.g., crack **1204** of FIG. 12), where the sleeve sections **1506, 1508** are oriented such that the crack is placed roughly at the center of one of the sleeve sections (referred to herein as the sealing sleeve section).

The pipe repair device **1500** also includes a contiguous, but sectioned molded handle section (e.g., a first handle section **1516** and a second handle section **1518**). The first handle section **1516** connects the second sleeve section **1508** and the second handle section **1518** via handle living hinges **1520, 1522,** respectively. The first handle section **1516** is either unloaded or compressed depending on the position of the pipe repair device **1500.** In the depicted latched position, the first handle section **1516** is unloaded. The second handle section **1518** is movable by a user and permits the user to selectively attach and remove the pipe repair device **1500** to and from the pipe **1502.** Further, the first sleeve section **1506** includes a contiguous strike **1512** and the second handle section **1518** includes a contiguous draw hook **1514.** The strike **1512** and the draw hook **1514** are selectively engaged / disengaged by the user to attach / detach the pipe repair device **1500** to / from the pipe **1502.** In the depicted latched position, the pipe repair device **1500** is in position over the crack and the strike **1512** and the draw hook **1514** are engaged, but the user has yet to apply pressure to the second handle section **1518** in order to lock the pipe repair device **1500.**

Various additional or alternative details regarding the pipe repair device **1500** and the damaged pipe **1502** are as discussed above with reference to FIG. 12 and also with reference to other Figures herein.

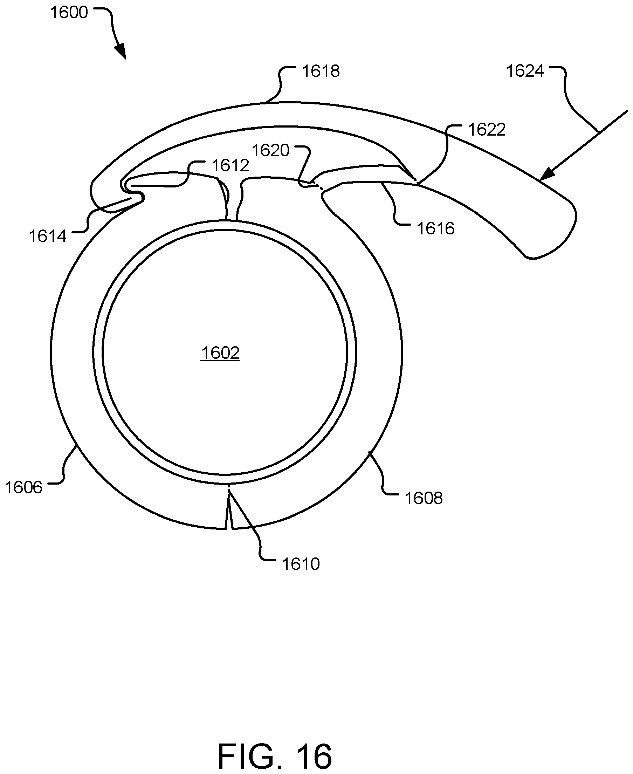

FIG. 16 illustrates a cross sectional view of an example pipe repair device **1600** in a break-over position over a damaged pipe **1602.** The pipe repair device **1600** includes a contiguous, but sectioned molded sleeve section (e.g., a first sleeve section **1606** and a second sleeve section **1608**) connected by sleeve living hinge **1610.** The sleeve section is opened at the sleeve living hinge **1610** to permit the sleeve sections **1606,1608** to be placed around the pipe **1602** at a crack (not shown, see e.g., crack **1204** of FIG. 12), where the sleeve sections **1606, 1608** are oriented such that the crack is placed roughly at the center of one of the sleeve sections (referred to herein as the sealing sleeve section).

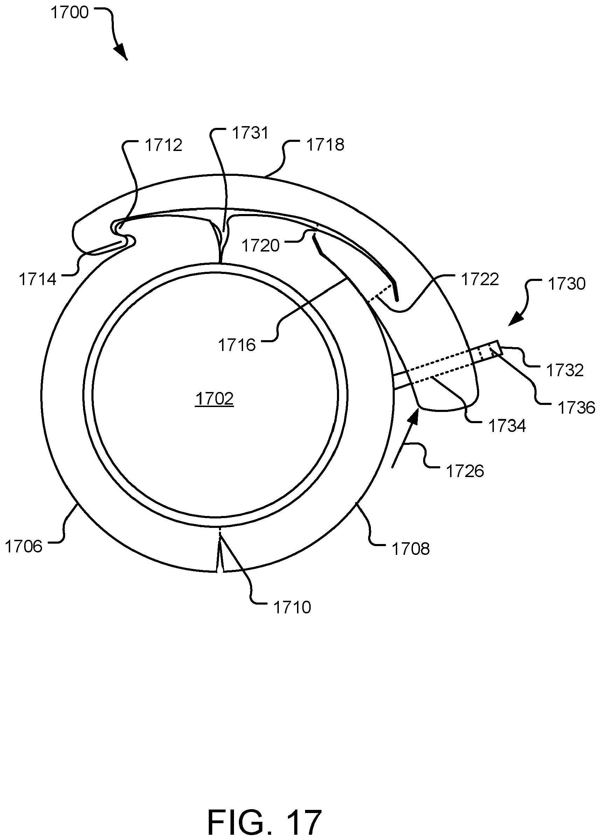

The pipe repair device **1600** also includes a contiguous, but sectioned molded handle section (e.g., a first handle section **1616** and a second handle section **1618**). The first handle section **1616** connects the second sleeve section **1608** and the second handle section **1618** via handle living hinges **1620, 1622,** respectively. The first handle section **1616** is either unloaded or compressed depending on the position of the pipe repair device **1600.** The second handle section **1618** is movable by a user and permits the user to selectively attach and remove the pipe repair device **1600** to and from the pipe **1602.** In the depicted break-over position, the first handle section **1616** is loaded at generally its greatest magnitude as pressure is applied to the second handle section **1618** (as illustrated by arrow **1624**). The compression magnitude drops as the first handle section **1616** is moved further (see e.g., the locked position of FIG. 17) and the first handle section **1616** tends to move toward the locked position of FIG. 7 and maintain that position absent additional force applied to the second handle section **1618** by the user.

Further, the first sleeve section **1606** includes a contiguous strike **1612** and the second handle section **1618** includes a contiguous draw hook **1614.** The strike **1612** and the draw hook **1614** are selectively engaged / disengaged by the user to attach / detach the pipe repair device **1600** to / from the pipe **1602.** In the depicted break-over position, the pipe repair device **1600** is in position over the crack and the strike **1612** and the draw hook **1614** are engaged and pulling against one another as the user applies pressure to the second handle section **1618.** The tensioned strike **1612** and draw hook **1614** tension the sleeve sections **1606, 1608,** thereby applying radial compressive force to the damaged pipe **1602.**

Various additional or alternative details regarding the pipe repair device **1600** and the damaged pipe **1602** are as discussed above with reference to FIG. 12 and also with reference to other Figures herein.

FIG. 17 illustrates a cross sectional view of an example pipe repair device **1700** in a locked position over a damaged pipe **1702.** The pipe repair device **1700** includes a contiguous, but sectioned molded sleeve section (e.g., a first sleeve section **1706** and a second sleeve section **1708**) connected by sleeve living hinge **1710.** The sleeve section is opened at the sleeve living hinge **1710** to permit the sleeve sections **1706, 1708** to be placed around the pipe **1702** at a crack (not shown, see e.g., crack **1204** of FIG. 12), where the sleeve sections **1706, 1708** are oriented such that the crack is placed roughly at the center of one of the sleeve sections (referred to herein as the sealing sleeve section).

The pipe repair device **1700** also includes a contiguous, but sectioned molded handle section (e.g., a first handle section **1716** and a second handle section **1718**). The first handle section **1716** connects the second sleeve section **1708** and the second handle section **1718** via handle living hinges **1720, 1722,** respectively. The first handle section **1716** is either unloaded or compressed depending on the position of the pipe repair device **1700.** The second handle section **1718** is movable by a user and permits the user to selectively attach and remove the pipe repair device **1700** to and from the pipe **1702.** In the depicted locked position, the first handle section **1716** rests against the second sleeve section **1708** and maintains that position due to increasing compressive force applied to the first handle section **1716** if the first handle section **1716** is unlocked. If and when the user desires to unlock the pipe repair device **1700,** the user applies a force to the second handle section **1718** illustrated by arrow **1724** sufficient to overcome the increasing compressive force applied to the first handle section **1716** as the pipe repair device **1700** is unlocked.

Further, the first sleeve section **1706** includes a contiguous strike **1712** and the second handle section **1718** includes a contiguous draw hook **1714.** The strike **1712** and the draw hook **1714** are selectively engaged / disengaged by the user to attach / detach the pipe repair device **1700** to / from the pipe **1702.** In the depicted locked position, the pipe repair device **1700** is in position over the crack and the strike **1712** and the draw hook **1714** are engaged and pulling against one another. The tensioned strike **1712** and the draw hook **1714** tension the sleeve sections **1706, 1708,** thereby applying radial compressive force to the damaged pipe **1702.** As the pipe repair device **1700** is moved from the latched position of FIG. 15, to the break-over position of FIG. 16, and to the locked position of FIG. 17, a gap **1731** between the sleeve sections **1706, 1708** is reduced to minimum value, which may equal 0-5% of the diameter of the pipe **1702.**

In some implementations, the pipe repair device **1700** may also be equipped with a locking mechanism **1730,** which includes a protruding portion **1732** from the second sleeve section **1708** that extends through an aperture **1734** in the second handle section **1718.** The protruding portion **1732** also includes an aperture **1736** that enables a user to put a padlock, clasp threaded bolt with nut, etc. (not shown) through the aperture **1736,** thus preventing the pipe repair device **1700** from being inadvertently unlocked (without releasing the padlock or clasp first).

Various additional or alternative details regarding the pipe repair device **1700** and the damaged pipe **1702** are as discussed above with reference to FIG. 12 and also with reference to other Figures herein.

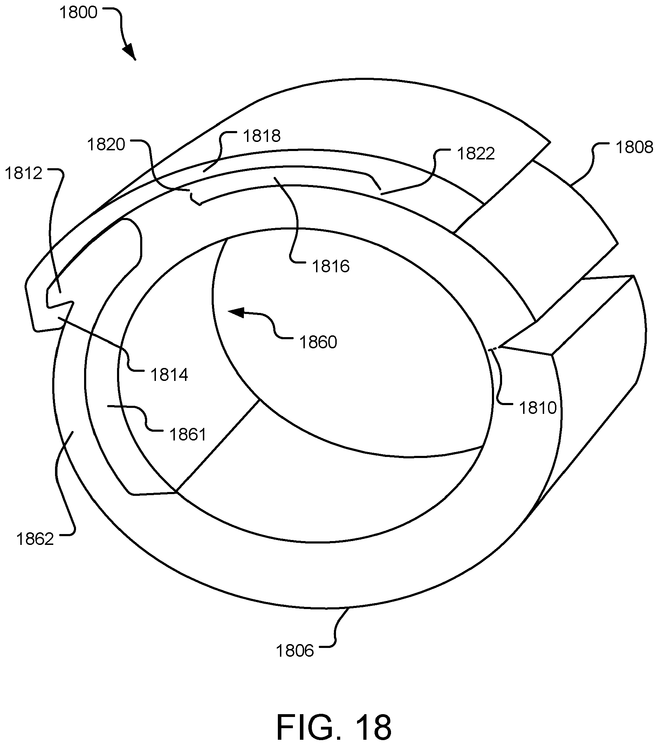

FIG. 18 illustrates a perspective view of an example pipe repair device **1800** according to the invention having an overlap portion **1860** in a locked position. The pipe repair device **1800** includes a contiguous, but sectioned molded sleeve section (e.g., a first sleeve section **1806** and a second sleeve section **1808**) connected by sleeve living hinge **1810.** The sleeve section is opened at the sleeve living hinge **1810** to permit the sleeve sections **1806, 1808** to be placed around a pipe (not shown, see e.g., pipe **1702** of FIG. 7) at a crack (not shown, see e.g., crack **1204** of FIG. 12), where the sleeve sections **1806, 1808** are oriented such that the crack is placed roughly at the center of one of the sleeve sections (referred to herein as the sealing sleeve section).

The overlap portion **1860** permits the pipe repair device **1800** to be locked around the pipe without a gap between the sleeve sections 1806, 1808. More specifically, the second sleeve section **1808** includes an inner overlap **1861** and the first sleeve section **1806** includes an outer overlap **1862.** The inner and outer overlaps **1861, 1862** overlap one another when the pipe repair device **1800** is placed and locked around the pipe.

The pipe repair device **1800** also includes a contiguous, but sectioned molded handle section (e.g., a first handle section **1816** and a second handle section **1818**). The first handle section **1816** connects the second sleeve section **1808** and the second handle section **1818** via handle living hinges **1820, 1822,** respectively. The first handle section **1816** is either unloaded or compressed depending on the position of the pipe repair device **1800.** The second handle section **1818** is movable by a user and permits the user to selectively attach and remove the pipe repair device **1800** to and from the pipe. In the depicted locked position, the first handle section **1816** rests against the second sleeve section **1808** and maintains that position due to increasing compressive force applied to the first handle section **1816** if the first handle section **1816** is unlocked. If and when the user desires to unlock the pipe repair device **1800,** the user applies an outward force to the second handle section **1818** sufficient to overcome the increasing compressive force applied to the first handle section **1816** as the pipe repair device **1800** is unlocked.

Further, the first sleeve section **1806** includes a contiguous strike **1812** and the second handle section **1818** includes a contiguous draw hook **1814.** The strike **1812** and the draw hook **1814** are selectively engaged / disengaged by the user to attach / detach the pipe repair device **1800** to / from the pipe. In the depicted locked position, the pipe repair device **1800** is in position over the crack and the strike **1812** and the draw hook **1814** are engaged and pulling against one another. The tensioned strike **1812** and the draw hook **1814** tension the sleeve sections **1806, 1808,** thereby applying radial compressive force to the damaged pipe.

Various additional or alternative details regarding the pipe repair device **1800** and the damaged pipe are as discussed above with reference to FIG. 12 and also with reference to other Figures herein.

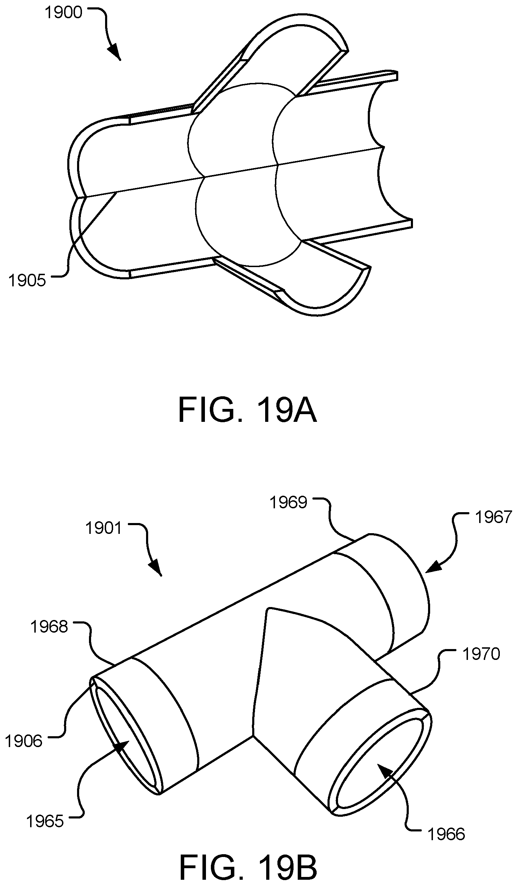

FIG. 19A illustrates a perspective view of an example tee repair device **1900** in an open position. The tee repair device **1900** includes living hinge **1905,** which permits the tee repair device **1900** to be selectively opened and placed around a tee portion of a pipe (not shown, see e.g., pipe **1702** of FIG. 7) at a crack (not shown, see e.g., crack **1204** of FIG. 12). The tee repair device **1900** is sized such that its inside profile closely matches an exterior profile of the tee portion of the pipe.

While not shown in FIG. 19A, each of three openings (not shown, see e.g., openings **1965,1966,1967** of FIG. 19B) in the tee repair device **1900** includes a variation of the pipe repair devices disclosed elsewhere in at least FIGs. 14-18 herein. Additional detail is described below with reference to FIG. 19B.

FIG. 19B illustrates a perspective view of an example tee repair device **1901** in a closed position. The tee repair device **1901** includes living hinge **1906,** which permits the tee repair device **1901** to be selectively closed around a tee portion of a pipe (not shown, see e.g., pipe **1702** of FIG. 7) at a crack (not shown, see e.g., crack **1204** of FIG. 12). The tee repair device **1901** is sized such that its inside profile closely matches an exterior profile of the tee portion of the pipe.

Each of three openings **1965, 1966, 1967** in the tee repair device **1901** includes a variation of the pipe repair devices disclosed elsewhere in at least FIGs. 14-18 herein. More specifically, openings **1965, 1967** may each include a pipe repair device **1968, 1969.** Each of the pipe repair devices **1968, 1969** may include features as described above with reference to FIGs. 14-18, with the living hinge **1906** acting as the living hinges **1410, 1510, 1610, 1710, 1810** of FIGs. 14-18. As the opening **1966** opens entirely (see open position of FIG. 19A), pipe repair device **1970** may be an entirely separate component that is attached over the tee repair device **1901** to secure the opening **1966** around the pipe.

Detail of the pipe repair devices **1968, 1969, 1970** are omitted from FIGs. 19A and 19B for clarity but may match that of one or more of FIGs. 14-18, for example.

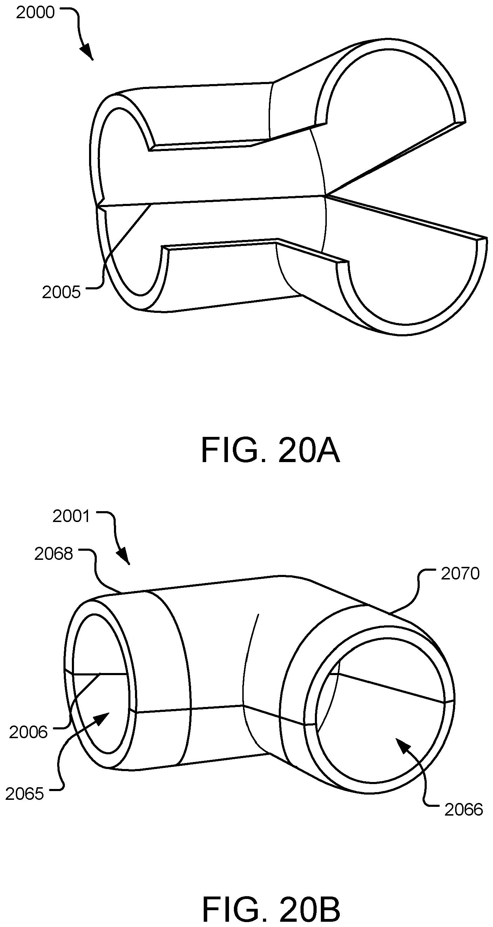

FIG. 20A illustrates a perspective view of an example elbow repair device **2000** in an open position. The elbow repair device **2000** includes living hinge **2005,** which permits the elbow repair device **2000** to be selectively opened and placed around an elbow portion of a pipe (not shown, see e.g., pipe **1702** of FIG. 7) at a crack (not shown, see e.g., crack **1204** of FIG. 12). The elbow repair device **2000** is sized such that its inside profile closely matches an exterior profile of the elbow portion of the pipe.

While not shown in FIG. 20A, each of two openings (not shown, see e.g., openings **2065, 2066** of FIG. 20B) in the elbow repair device **2000** includes a variation of the pipe repair devices disclosed elsewhere in at least FIGs. 14-18 herein. Additional detail is described below with reference to FIG. 20B.

FIG. 20B illustrates a perspective view of an example elbow repair device **2001** in a closed position. The elbow repair device **2001** includes living hinge **2006,** which permits the elbow repair device **2001** to be selectively closed around an elbow portion of a pipe (not shown, see e.g., pipe **1702** of FIG. 7) at a crack (not shown, see e.g., crack **1204** of FIG. 12). The elbow repair device **2001** is sized such that its inside profile closely matches an exterior profile of the elbow portion of the pipe.

Each of two openings **2065, 2066** in the elbow repair device **2001** includes a variation of the pipe repair devices disclosed elsewhere in at least FIGs. 14-18 herein. More specifically, opening **2065** may include a pipe repair device **2068.** The pipe repair device **2068** may include features as described above with reference to FIGs. 14-18, with the living hinge **2006** acting as the living hinges **1410, 1510, 1610, 1710, 1810** of FIGs. 14-18. As the opening **2066** opens entirely (see open position of FIG. 19A), pipe repair device **2070** may be an entirely separate component that is attached over the elbow repair device **2001** to secure the opening **2066** around the pipe.

Detail of the pipe repair devices **2068, 2070** are omitted from FIGs. 20A and 20B for clarity but may match that of one or more of FIGs. 14-18, for example.

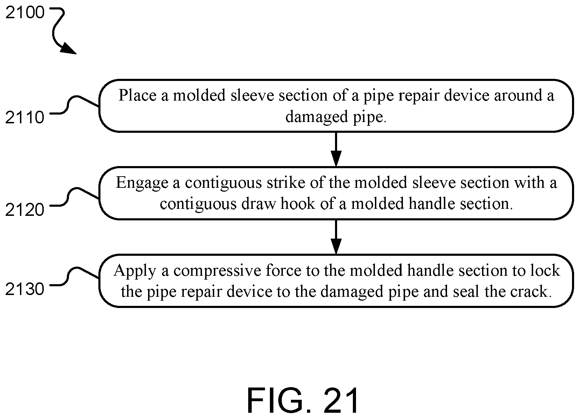

FIG. 21 illustrates example operations **2100** for using a pipe repair device to seal an opening in a damaged pipe. A placing operation **2110** places a molded sleeve section of the pipe repair device around a damaged pipe, particularly with the molded sleeve section covering a crack in the pipe. An engaging operation **2120** engages a contiguous strike of the molded sleeve section with a contiguous draw hook of a molded handle section. The molded handle section is connected to the molded sleeve section with a living hinge. An applying operation **2130** applies a compressive force to the molded handle section to lock the pipe repair device to the damaged pipe and seal the crack.

In various implementations, the pipe repair device may be extruded in a lengthy section, and then cut into multiple individual pipe repair devices from the extruded section. Examples of the extruded sections may be found in FIGs. 14-18 herein, for example. Further, in an implementation wherein the pipe repair device includes two materials, a relatively rigid outer material (e.g., a metal alloy) and an inner resiliently deflectable material (e.g., a gasket material), the pipe repair device may be extruded in lengthy section of both materials simultaneously, or extruded separately and later combined together. In an example implementation, two types of plastic materials with variable density/hardness are molded together forming a monolithic pipe repair device section (also referred to herein as a dual durometer monolithic pipe repair device), with a harder exterior (which provides structure) and a softer interior (which acts as a gasket). Such a pipe repair device section may be extruded in a lengthy section, and then cut into multiple individual pipe repair devices, as discussed above.

The logical operations recited herein may be performed in any order, unless explicitly claimed otherwise or a specific order is inherently necessitated by the claim language.

The above specification, examples, and data provide a complete description of the structure and use of exemplary embodiments of the invention. Embodiments of the invention can be made as long as they do not depart from the scope of the claims hereinafter appended. Furthermore, structural features of the different embodiments may be combined in yet another embodiment as long as it does not depart from the scope of the recited claims. It is noted that the examples shown and described are provided for purposes of illustration and are not intended to be limiting. Still other examples are also contemplated.

## Claims

1. A pipe repair device (1800) comprising:
a molded sleeve section including:
a first molded sleeve section (1806) including an outer overlap (1862) and a contiguous strike (1812); and
a second molded sleeve section (1808) connected to the first molded sleeve section with a sleeve living hinge (1810), the second molded sleeve section including an inner overlap (1861); and
a molded handle section (1818) including a contiguous draw hook (1814),
the molded handle section connected to the molded sleeve section with a first living hinge (1820),
the draw hook to selectively engage with the strike and the outer overlap to overlap the inner overlap when the pipe repair device is applied to a damaged pipe.

2. The pipe repair device of any previous claim, wherein the entirety of the pipe repair device is of a monolithic construction.

3. The pipe repair device of any previous claim, wherein the molded sleeve section is compressively wrapped around the damaged pipe and maintained in a tensioned condition when the pipe repair device is applied to the damaged pipe.

4. The pipe repair device of any previous claim, wherein the molded handle section includes:
a first molded handle section (1416) connected to the molded sleeve section with the first living hinge; and
a second molded handle section (1418) including the contiguous draw hook connected to the first molded handle section with a handle living hinge (1422).

5. The pipe repair device of claim 4, wherein the first molded handle section is maintained in a compressed condition and the second molded handle section is maintained in a tensioned condition when the pipe repair device is applied to the damaged pipe.

6. The pipe repair device of any previous claim, wherein the pipe repair device is made of a resiliently elastic material that forms a seal against the damaged pipe when the pipe repair device is applied to the damaged pipe.

7. The pipe repair device of any previous claim, further comprising:
a resiliently elastic gasket (1221) that forms a seal against the damaged pipe when the pipe repair device is applied to the damaged pipe.

8. The pipe repair device of any previous claim, wherein the molded sleeve section and the molded handle section each include a harder exterior layer and a softer interior layer.

9. The pipe repair device of any previous claim adapted to be formed by cutting it from a lengthy extruded section.

10. The pipe repair device of any previous claim, further comprising:
a lock (1730) that prevents a user from releasing the pipe repair device from a locked position without releasing the lock.

11. The pipe repair device of any previous claim, wherein the pipe repair device is entirely of a resiliently elastic material.

12. A method of using a pipe repair device (2100) comprising:
placing a molded sleeve section around a damaged pipe (2110), the molded sleeve section including:
a first molded sleeve section including an outer overlap and a contiguous strike; and
a second molded sleeve section connected to the first molded sleeve section with a sleeve living hinge, the second molded sleeve section including an inner overlap;
engaging the contiguous strike of the molded sleeve section with a contiguous draw hook of a molded handle section, wherein the outer overlap overlaps the inner overlap, the molded handle section connected to the molded sleeve section with a first living hinge (2120); and
applying compressive force to the molded handle section to lock the pipe repair device to the damaged pipe (2130).

13. The method of claim 12, wherein the entirety of the pipe repair device is of a monolithic construction.

14. The method of claim 12, wherein the molded sleeve section and the molded handle section of the pipe repair device each include a harder exterior layer and a softer interior layer.

## Patentansprüche

1. Rohrreparaturvorrichtung (1800), aufweisend:
einen geformten Hülsenabschnitt mit:
einem ersten geformten Hülsenabschnitt (1806), der eine äußere Überlappung (1862) und einen angrenzenden Anschlag (1812) enthält; und
einem zweiten geformten Hülsenabschnitt (1808), der mit dem ersten geformten Hülsenabschnitt mit einem Hülsenfilmscharnier (1810) verbunden ist, wobei der zweite geformte Hülsenabschnitt eine innere Überlappung (1861) enthält; und
einen geformten Griffabschnitt (1818) mit einem angrenzenden Zughaken (1814), wobei der geformte Griffabschnitt mit dem geformten Hülsenabschnitt mit einem ersten Filmscharnier (1820) verbunden ist, wobei der Zughaken selektiv mit dem Anschlag und der äußeren Überlappung in Eingriff kommt, um die innere Überlappung zu überlappen, wenn die Rohrreparaturvorrichtung an einem beschädigten Rohr angebracht ist.

2. Rohrreparaturvorrichtung nach einem der vorhergehenden Ansprüche, bei welcher die Gesamtheit der Rohrreparaturvorrichtung aus einer monolithischen Konstruktion besteht.

3. Rohrreparaturvorrichtung nach einem der vorhergehenden Ansprüche, bei welcher der geformte Hülsenabschnitt unter Druck um das beschädigte Rohr gewickelt und in einem gespannten Zustand gehalten wird, wenn die Rohrreparaturvorrichtung an das beschädigte Rohr angebracht ist.

4. Rohrreparaturvorrichtung nach einem der vorhergehenden Ansprüche, bei welcher der geformte Griffabschnitt enthält:
einen ersten geformten Griffabschnitt (1416), der mit dem geformten Hülsenabschnitt mit dem ersten Filmscharnier verbunden ist; und
einen zweiten geformten Griffabschnitt (1418), der den angrenzenden Zughaken enthält, der mit dem ersten geformten Griffabschnitt mit einem Griff-Filmscharnier (1422) verbunden ist.

5. Rohrreparaturvorrichtung nach Anspruch 4, bei welcher der erste geformte Griffabschnitt in einem komprimierten Zustand gehalten wird und der zweite geformte Griffabschnitt in einem gespannten Zustand gehalten wird, wenn die Rohrreparaturvorrichtung an das beschädigte Rohr angebracht ist.

6. Rohrreparaturvorrichtung nach einem der vorhergehenden Ansprüche, bei welcher die Rohrreparaturvorrichtung aus einem nachgiebig elastischen Material gemacht ist, das eine Dichtung gegen das beschädigte Rohr bildet, wenn die Rohrreparaturvorrichtung an das beschädigte Rohr angebracht ist.

7. Rohrreparaturvorrichtung nach einem der vorhergehenden Ansprüche, ferner aufweisend:
eine nachgiebig elastische Dichtung (1221), die eine Dichtung gegen das beschädigte Rohr bildet, wenn die Rohrreparaturvorrichtung an das beschädigte Rohr angebracht ist.

8. Rohrreparaturvorrichtung nach einem der vorhergehenden Ansprüche, bei welcher der geformte Hülsenabschnitt und der geformte Griffabschnitt jeweils eine härtere Außenschicht und eine weichere Innenschicht enthalten.

9. Rohrreparaturvorrichtung nach einem der vorhergehenden Ansprüche, die angepasst ist, um durch Schneiden aus einem langen extrudierten Abschnitt gebildet zu werden.

10. Rohrreparaturvorrichtung nach einem der vorhergehenden Ansprüche, ferner aufweisend:
eine Verriegelung (1730), die einen Benutzer daran hindert, die Rohrreparaturvorrichtung aus einer verriegelten Position zu lösen, ohne die Verriegelung zu lösen.

11. Rohrreparaturvorrichtung nach einem der vorhergehenden Ansprüche, wobei die Rohrreparaturvorrichtung vollständig aus einem nachgiebig elastischen Material besteht.

12. Verfahren zur Verwendung einer Rohrreparaturvorrichtung (2100), aufweisend:
Platzieren eines geformten Hülsenabschnitts um ein beschädigtes Rohr (2110),
wobei der geformte Hülsenabschnitt enthält:
einen ersten geformten Hülsenabschnitt, der eine äußere Überlappung und einen angrenzenden Anschlag enthält; und
einen zweiten geformten Hülsenabschnitt, der mit dem ersten geformten Hülsenabschnitt mit einem Hülsenfilmscharnier verbunden ist, wobei der zweite geformte Hülsenabschnitt eine innere Überlappung enthält;
Ineingriffbringen des angrenzenden Anschlags des geformten Hülsenabschnitts mit einem angrenzenden Zughaken eines geformten Griffabschnitts, wobei die äußere Überlappung die innere Überlappung überlappt, wobei der geformte Griffabschnitt mit dem geformten Hülsenabschnitt mit einem ersten Filmscharnier (2120) verbunden ist; und
Aufbringen einer Druckkraft auf den geformten Griffabschnitt, um die Rohrreparaturvorrichtung an dem beschädigten Rohr (2130) zu verriegeln.

13. Verfahren nach Anspruch 12, bei welchem die Gesamtheit der Rohrreparaturvorrichtung aus einer monolithischen Konstruktion besteht.

14. Verfahren nach Anspruch 12, bei welchem der geformte Hülsenabschnitt und der geformte Griffabschnitt der Rohrreparaturvorrichtung jeweils eine härtere Außenschicht und eine weichere Innenschicht enthalten.

## Revendications

1. Dispositif de réparation de tuyau (1800) comprenant :
une section de manchon moulé incluant :
une première section de manchon moulée (1806) incluant un chevauchement externe (1862) et une gâche contiguë (1812) ; et
une deuxième section de manchon moulée (1808) reliée à la première section de manchon moulée avec une charnière vivante de manchon (1810), la deuxième section de manchon moulée incluant un chevauchement interne (1861) ; et
une section d'anse moulée (1818) incluant un crochet de traction contigu (1814), la section d'anse moulée étant reliée à la section de manchon moulée avec une première charnière vivante (1820), le crochet de traction venant sélectivement en contact avec la gâche et le chevauchement externe pour chevaucher le chevauchement interne lorsque le dispositif de réparation de tuyau est appliqué sur un tuyau endommagé.

2. Dispositif de réparation de tuyau selon la revendication précédente, dans lequel l'entièreté du dispositif de réparation de tuyau est de construction monolithique.

3. Dispositif de réparation de tuyau selon l'une quelconque des revendications précédentes, dans lequel la section de manchon moulée est enroulée par compression autour du tuyau endommagé et maintenue dans un état tendu lorsque le dispositif de réparation de tuyau est appliqué sur le tuyau endommagé.

4. Dispositif de réparation de tuyau selon l'une quelconque des revendications précédentes, dans lequel la section d'anse moulée inclut :
une première section d'anse moulée (1416) reliée à la section de manchon moulée avec la première charnière vivante ; et
une deuxième section d'anse moulée (1418) incluant le crochet de traction contigu relié à la première section d'anse moulée avec une charnière vivante d'anse (1422).

5. Dispositif de réparation de tuyau selon la revendication 4, dans lequel la première section d'anse moulée est maintenue dans un état comprimé et la deuxième section d'anse moulée est maintenue dans un état tendu lorsque le dispositif de réparation de tuyau est appliqué sur le tuyau endommagé.

6. Dispositif de réparation de tuyau selon l'une quelconque des revendications précédentes, dans lequel le dispositif de réparation de tuyau est constitué d'un matériau élastique résilient qui forme un joint d'étanchéité contre le tuyau endommagé lorsque le dispositif de réparation de tuyau est appliqué sur le tuyau endommagé.

7. Dispositif de réparation de tuyau selon l'une quelconque des revendications précédentes, comprenant en outre :
une garniture élastique résiliente (1221) qui forme un joint d'étanchéité contre le tuyau endommagé lorsque le dispositif de réparation de tuyau est appliqué sur le tuyau endommagé.

8. Dispositif de réparation de tuyau selon l'une quelconque des revendications précédentes, dans lequel la section de manchon moulée et la section d'anse moulée incluent chacune une couche extérieure plus dure et une couche intérieure plus molle.

9. Dispositif de réparation de tuyau selon l'une quelconque des revendications précédentes, lequel est adapté pour être formé en étant découpé à partir d'une longue section extrudée.

10. Dispositif de réparation de tuyau selon l'une quelconque des revendications précédentes, comprenant en outre :
un verrou (1730) qui empêche un utilisateur de libérer le dispositif de réparation de tuyau d'une position verrouillée sans libérer le verrou.

11. Dispositif de réparation de tuyau selon l'une quelconque des revendications précédentes, dans lequel le dispositif de réparation de tuyau est entièrement en un matériau élastique résilient.

12. Procédé d'utilisation d'un dispositif de réparation de tuyau (2100) consistant à :
placer une section de manchon moulée autour d'un tuyau endommagé (2110), la section de manchon moulée incluant :
une première section de manchon moulée incluant un chevauchement externe et
une gâche contiguë ; et
une deuxième section de manchon moulée reliée à la première section de manchon moulée avec une charnière vivante de manchon, la deuxième section de manchon moulée incluant un chevauchement interne ;
faire venir la gâche contiguë de la section de manchon moulée en contact avec un crochet de traction contigu d'une section d'anse moulée, le chevauchement externe chevauchant le chevauchement interne, la section d'anse moulée étant reliée à la section de manchon moulée avec une première charnière vivante (2120) ; et
appliquer une force de compression sur la section d'anse moulée pour verrouiller le dispositif de réparation de tuyau sur le tuyau endommagé (2130).

13. Procédé selon la revendication 12, dans lequel l'entièreté du dispositif de réparation de tuyau est de construction monolithique.

14. Procédé selon la revendication 12, dans lequel la section de manchon moulée et la section d'anse moulée du dispositif de réparation de tuyau incluent chacune une couche extérieure plus dure et une couche intérieure plus molle.
